# FASCICULE DE BREVET EUROPEEN

(11) **EP 4 183 066 B1**
(45) Date de publication et mention de la délivrance du brevet: **25.10.2023**
(21) Numéro de dépôt: 22782915.7
(22) Date de dépôt: 05.09.2022
(51) Int. Cl.: H04B 10/118

(54) **PROCÉDÉ D'ÉMISSION DE DONNÉES PAR UN ENGIN SPATIAL COMPORTANT UN MODULE D'ÉMISSION LASER**
VERFAHREN ZUR DATENÜBERTRAGUNG DURCH EIN RAUMFAHRZEUG MIT EINEM LASER-SENDEMODUL
METHOD FOR TRANSMITTING DATA BY A SPACECRAFT COMPRISING A LASER EMISSION MODULE

(30) Priorité: 08.09.2021 FR 2109387
(43) Date de publication de la demande: 24.05.2023
(73) Titulaire: Airbus Defence and Space SAS, 31402 Toulouse Cedex 4 (FR)
(72) Inventeur: GHEZAL, Mehdi, 31402 TOULOUSE CEDEX 4 (FR); GIRAUD, Emmanuel, 31402 TOULOUSE (FR)
(74) Mandataire: Plasseraud IP
(86) Numéro de dépôt international: PCT/FR2022/051669
(87) Numéro de publication internationale: WO 2023/037067

(56) Documents cités:
- EP-A1- 2 247 505
- EP-B1- 2 247 505
- EP-B1- 2 388 646
- EP-B1- 3 488 540
- WO-A1-2018/231152
- CN-A- 111 901 032

## Description

### Domaine technique

La présente invention appartient au domaine de la transmission de données par des engins spatiaux, tels que des satellites d'observation, et concerne plus particulièrement un procédé d'émission de données par un engin spatial en orbite défilante, lesdites données correspondant à des images acquises par un instrument d'observation de l'engin spatial, ainsi qu'un engin spatial pour la mise en oeuvre d'un tel procédé d'émission.

### Etat de la technique

Les missions d'observation terrestre effectuées par un engin spatial consistent à acquérir des images de parties de la surface de la Terre, c'est-à-dire effectuer des prises de vues de celle-ci. De telles acquisitions sont par exemple réalisées en réponse à des requêtes clients, et servent de base à la production d'images composites finales.

De manière conventionnelle, un tel engin spatial suit une orbite défilante autour de la Terre afin de réaliser des acquisitions lors de son survol de la surface de la Terre. A cet effet, il comporte un instrument d'observation associé à une résolution spatiale prédéterminée ainsi qu'à une ligne de visée optique. De manière connue, une telle ligne de visée optique forme la partie sortante du chemin optique de l'instrument d'observation, et pointe en direction de la surface de la Terre lors des acquisitions d'images.

La méthode d'acquisition généralement mise en oeuvre pour l'observation d'une zone terrestre est celle connue sous le nom de « balayage par bandes » (ou « pushbroom » dans la littérature anglo-saxonne). Dans un tel mode « pushbroom », un capteur ligne réalise l'acquisition successive d'une pluralité d'images lignes et l'image de la zone terrestre complète, dite « image composite », est obtenue en combinant lesdites images lignes.

Du fait des besoins croissants en termes d'acquisition d'images, de nombreuses images doivent pouvoir être acquises et transférées au sol au cours d'une même période orbitale. Pour permettre de transférer rapidement au sol une grande quantité de données, une possibilité envisagée est d'équiper l'engin spatial d'un module d'émission laser pour transférer ces données via une liaison laser. Toutefois, l'utilisation d'un module d'émission laser pour transférer les données au sol augmente également la complexité de l'engin spatial et de son contrôle.

Le brevet EP 3488540 B1 propose un instrument d'observation fonctionnant en mode « pushbroom », comportant un capteur ligne et un module d'émission laser tous deux situés à un plan focal d'une optique de l'instrument d'observation. De telles dispositions sont avantageuses puisqu'elles permettent de réduire dans une certaine mesure la quantité d'équipements à embarquer dans l'engin spatial, puisque la même optique est utilisée à la fois par le capteur ligne et le module d'émission laser.

Toutefois, la solution proposée par le brevet EP 3488540 B1 reste complexe, notamment d'un point de vue contrôle de l'engin spatial pour assurer un pointage précis du module d'émission laser lors des transferts de données.

### Exposé de l'invention

La présente invention a pour objectif de remédier à tout ou partie des inconvénients de l'art antérieur, notamment ceux exposés ci-avant, en proposant une solution qui permette d'améliorer le pointage du module d'émission laser en limitant les équipements à embarquer dans l'engin spatial.

A cet effet, et selon un premier aspect, il est proposé un procédé d'émission de données par un engin spatial en orbite défilante autour de la Terre, l'engin spatial comportant :
- un instrument d'observation comportant une optique et un capteur matriciel situé à un plan focal de ladite optique, pour acquérir des images dans le cadre d'une mission d'observation de l'engin spatial, ledit instrument d'observation étant associé à un champ de vision, ledit champ de vision étant fixe en repère engin spatial et étant défini par le capteur matriciel situé au plan focal de l'optique,
- un module d'émission laser associé à une ligne de visée laser fixe en repère engin spatial, ledit module d'émission laser étant situé au plan focal ou à un plan focal secondaire de l'optique ou à un plan focal intermédiaire d'une partie de l'optique.

Le procédé d'émission comporte des étapes de :
- acquisition, par le capteur matriciel, d'une image d'une zone dite de calibration, dite image de calibration,
- obtention de données de référence associées à la zone de calibration,
- détermination d'une erreur de pointage de la ligne de visée laser par comparaison de l'image de calibration et des données de référence,
- contrôle du pointage de l'engin spatial en corrigeant l'erreur de pointage, pour faire pointer la ligne de visée laser vers un module de réception laser,
- émission de données par le module d'émission laser à destination du module de réception laser, lesdites données comportant une ou plusieurs images acquises par le capteur matriciel dans le cadre de la mission d'observation de l'engin spatial.

Pour pouvoir contrôler de manière précise le pointage de la ligne de visée laser lors de l'émission de données par le module d'émission laser, il est avantageux de tenir compte d'une erreur de pointage de la ligne de visée laser. Par « erreur de pointage », on entend un biais sur le pointage de la ligne de visée laser qui implique que, si on contrôle le pointage de la ligne de visée laser pour l'orienter vers un point de consigne prédéterminé, par exemple à la surface de la Terre, alors la ligne de visée laser pointe en réalité vers un point différent dudit point de consigne. Une telle erreur de pointage s'explique par exemple par une méconnaissance de :
- l'orientation réelle de la ligne de visée laser en repère engin spatial : en effet, bien que la ligne de visée laser soit fixe en repère engin spatial, elle peut néanmoins subir des variations au cours de la mission de l'engin spatial du fait notamment de déformations mécaniques (en particulier thermoélastiques) d'une structure dudit engin spatial, qui peuvent modifier la position et l'orientation de l'instrument d'observation par rapport à des capteurs d'attitude (senseur stellaire, gyromètre, etc.) de l'engin spatial,
- l'attitude réelle de l'engin spatial, par exemple dans le cas d'erreurs dans les mesures des capteurs d'attitude (notamment induites par une dérive des gyromètres), en particulier dans le cas considéré ici où le pointage de la ligne de visée laser, fixe en repère engin spatial, est contrôlé en contrôlant l'attitude dudit engin spatial, etc.

L'erreur de pointage est essentiellement une inconnue à deux dimensions, par exemple modélisée par une erreur d'attitude en roulis (par exemple autour d'un axe de roulis colinéaire à un vecteur vitesse de l'engin spatial en repère inertiel) et une erreur d'attitude en tangage (par exemple autour d'un axe de tangage perpendiculaire à un plan d'orbite de l'engin spatial), etc. Pour pouvoir l'estimer, il faut donc pouvoir observer cette erreur de pointage dans un espace à deux dimensions, au moins.

Dans la solution proposée, le capteur de l'instrument d'observation est un capteur matriciel, c'est-à-dire un capteur comportant une pluralité de lignes de cellules d'acquisition et une pluralité de colonnes de cellules d'acquisition. Un tel capteur matriciel produit des images 2D de la scène observée, qui peuvent par conséquent être utilisées pour estimer l'erreur de pointage.

En outre, le module d'émission laser et le capteur matriciel utilisent (au moins en partie) la même optique de l'instrument d'observation.

Le module d'émission laser est par exemple situé dans le plan focal de l'optique comme le capteur matriciel, ou dans un plan focal secondaire obtenu par duplication du plan focal de sorte que le plan focal et le plan focal secondaire se superposent optiquement. Le module d'émission laser peut aussi être situé dans un plan focal intermédiaire correspondant à une partie de l'optique de l'instrument d'observation. Par exemple si l'instrument d'observation a une optique de type Korsch, le plan focal intermédiaire peut correspondre au plan focal du Cassegrain associé.

Etant donné que le module d'émission laser et le capteur matriciel utilisent la même optique, l'erreur de pointage est essentiellement la même pour le capteur matriciel et pour le module d'émission laser. Par conséquent, le capteur matriciel, utilisé pour acquérir les images qui sont ensuite émises par le module d'émission laser, est avantageusement également utilisé pour estimer l'erreur de pointage du module d'émission laser.

A cet effet, le capteur matriciel réalise l'acquisition d'une image (2D) de calibration d'une zone de calibration pour laquelle des données de référence sont disponibles. Ces données de référence associées à la zone de calibration correspondent à des données déductibles d'une image représentant la zone de calibration, et correspondent aux valeurs attendues pour ces données en l'absence d'erreur de pointage. Par conséquent, en comparant les données de référence à l'image de calibration (c'est-à-dire aux valeurs des données correspondantes telles que déduites de l'image de calibration), il est possible d'observer l'erreur de pointage et de l'estimer.

L'erreur de pointage ainsi estimée est ensuite utilisée pour corriger le pointage de la ligne de visée laser. L'orientation de la ligne de visée laser est alors contrôlée en tenant compte de l'erreur de pointage estimée, pour faire pointer la ligne de visée laser vers le point de consigne considéré.

Tel qu'indiqué ci-dessus, c'est le même capteur matriciel qui est utilisé à la fois pour acquérir les images émises par le module d'émission laser (c'est-à-dire les images acquises dans le cadre de la mission d'observation de l'engin spatial) et pour acquérir les images de calibration utilisées pour calibrer l'erreur de pointage de la ligne de visée laser dudit module d'émission laser. Il n'est donc pas nécessaire de prévoir des moyens matériels dédiés à la calibration de l'erreur de pointage, tel qu'un autre capteur matriciel dédié à l'acquisition d'images de calibration pour estimer l'erreur de pointage.

Dans des modes particuliers de mise en oeuvre, le procédé d'émission peut comporter en outre, de manière optionnelle, l'une ou plusieurs des caractéristiques suivantes, prises isolément ou selon toutes les combinaisons techniquement possibles.

Dans des modes particuliers de mise en oeuvre, les données de référence comportent une image théorique de la zone de calibration.

Dans des modes particuliers de mise en oeuvre, le module de réception laser est intégré dans une station sol et la zone de calibration est une zone terrestre associée audit module de réception laser.

Dans des modes particuliers de mise en oeuvre, la zone de calibration est une zone de ciel de sorte que l'image de calibration représente des étoiles se trouvant dans le champ de vision du capteur matriciel et les données de référence sont déterminées à partir d'un catalogue d'étoiles.

Dans des modes particuliers de mise en oeuvre, le module de réception laser est embarqué dans un autre engin spatial en orbite terrestre.

Dans des modes particuliers de mise en oeuvre, la zone de calibration comporte une source lumineuse de position prédéterminée et les données de référence comportent une position théorique de la source lumineuse dans l'image de calibration, l'erreur de pointage étant déterminée par comparaison d'une position estimée de la source lumineuse dans l'image de calibration avec la position théorique.

Dans des modes particuliers de mise en oeuvre, la source lumineuse est colocalisée avec le module de réception laser.

Dans des modes particuliers de mise en oeuvre, la zone de calibration étant une zone à la surface de la Terre, l'engin spatial ayant une vitesse de défilement au sol Vₛₒₗ et l'instrument d'observation étant associé à une résolution spatiale Rₛ suivant une direction de défilement, l'acquisition de l'image de calibration est réalisée pendant une durée dite d'immobilisation supérieure à Rₛ/Vₛₒₗ pendant laquelle l'attitude de l'engin spatial est contrôlée de sorte qu'une empreinte au sol du champ de vision est maintenue immobile à la surface de la Terre. De telles dispositions permettent d'éviter les effets de filé et d'améliorer le rapport signal sur bruit (« signal to noise ratio » ou SNR) de l'image de calibration. De préférence, la durée d'immobilisation est significativement supérieure à Rₛ/Vₛₒₗ (facteur 100 voire 1000).

Dans des modes particuliers de mise en oeuvre, les étapes du procédé sont itérées pour l'émission de données vers un même module de réception laser, de sorte à alterner des phases de calibration et des phases d'émission, les phases de calibration réalisant l'estimation de l'erreur de pointage et les phases d'émission réalisant l'émission de données vers le même module de réception.

En effet, l'erreur de pointage peut éventuellement varier au cours d'une même émission de données, par exemple du fait d'une déformation thermoélastique de la structure de l'engin spatial qui varie au cours du temps. Dans un tel cas il est avantageux de prévoir plusieurs phases de calibration de l'erreur de pointage au cours d'une émission de données vers un même module de réception laser, en alternant les phases de calibration et des phases d'émission, pour corriger la dérive de l'erreur de pointage.

Selon un second aspect, il est proposé un engin spatial destiné à être placé en orbite défilante autour de la Terre, comportant :
- des moyens de contrôle d'attitude de l'engin spatial,
- un instrument d'observation associé à un champ de vision fixe en repère engin spatial et défini par un capteur matriciel situé à un plan focal d'une optique de l'instrument d'observation,
- un module d'émission laser associé à une ligne de visée laser fixe en repère engin spatial, ledit module d'émission laser étant situé au plan focal ou à un plan focal secondaire de l'optique ou à un plan focal intermédiaire d'une partie de l'optique,
- des moyens configurés pour mettre en oeuvre un procédé d'émission de données selon l'un quelconque des modes de mises de la présente invention.

Dans des modes particuliers de réalisation, l'engin spatial peut comporter en outre, de manière optionnelle, l'une ou plusieurs des caractéristiques suivantes, prises isolément ou selon toutes les combinaisons techniquement possibles.

Dans des modes particuliers de réalisation :
- ledit engin spatial étant d'inertie en tangage It et les moyens de contrôle d'attitude ayant une capacité Ct de formation de couple en tangage, le rapport Ct / It est supérieur à 0.01 s⁻², et/ou
- ledit engin spatial étant d'inertie en roulis Iᵣ et les moyens de contrôle d'attitude ayant une capacité Cᵣ de formation de couple en roulis, le rapport Cᵣ / Iᵣ est supérieur à 0.01 s⁻².

Dans des modes particuliers de réalisation, la capacité Ct est supérieure à 0.8 N·m et/ou la capacité Cᵣ est supérieure à 0.8 N·m.

Dans des modes particuliers de réalisation, les moyens de contrôle d'attitude comportent au moins une roue à réaction récupératrice d'énergie électrique et/ou au moins un actionneur gyroscopique.

Dans des modes particuliers de réalisation, l'instrument d'observation comporte au moins deux miroirs fixes en repère engin spatial, et le module d'émission laser émet un rayonnement laser suivant la ligne de visée laser via aux moins deux miroirs de l'instrument d'observation.

Dans des modes particuliers de réalisation, l'instrument d'observation comporte une optique de Korsch.

### Présentation des figures

L'invention sera mieux comprise à la lecture de la description suivante, donnée à titre d'exemple nullement limitatif, et faite en se référant aux figures qui représentent :
- Figure 1 : une représentation schématique d'un engin spatial en orbite défilante autour de la Terre,
- Figure 2 : un diagramme illustrant les principales étapes d'un mode de mise en oeuvre d'un procédé d'émission,
- Figure 3 : une représentation schématique de l'engin spatial au cours d'une émission de données comportant plusieurs phases de calibration et plusieurs phases d'émission,
- Figure 4 : une représentation schématique d'un satellite pour la mise en oeuvre d'un procédé d'émission,
- Figure 5 : une représentation schématique d'un capteur matriciel mettant en oeuvre un filtre de Bayer modifié,
- Figure 6 : une représentation d'une vue en coupe d'un premier exemple de réalisation d'un instrument d'observation et d'un module d'émission laser,
- Figure 7 : une représentation d'une vue en coupe d'un second exemple de réalisation de l'instrument d'observation et du module d'émission laser,
- Figure 8 : une représentation d'une vue en coupe d'un troisième exemple de réalisation de l'instrument d'observation et du module d'émission laser.

Dans ces figures, des références identiques d'une figure à une autre désignent des éléments identiques ou analogues. Pour des raisons de clarté, les éléments représentés ne sont pas à l'échelle, sauf mention contraire.

### Description des modes de réalisation

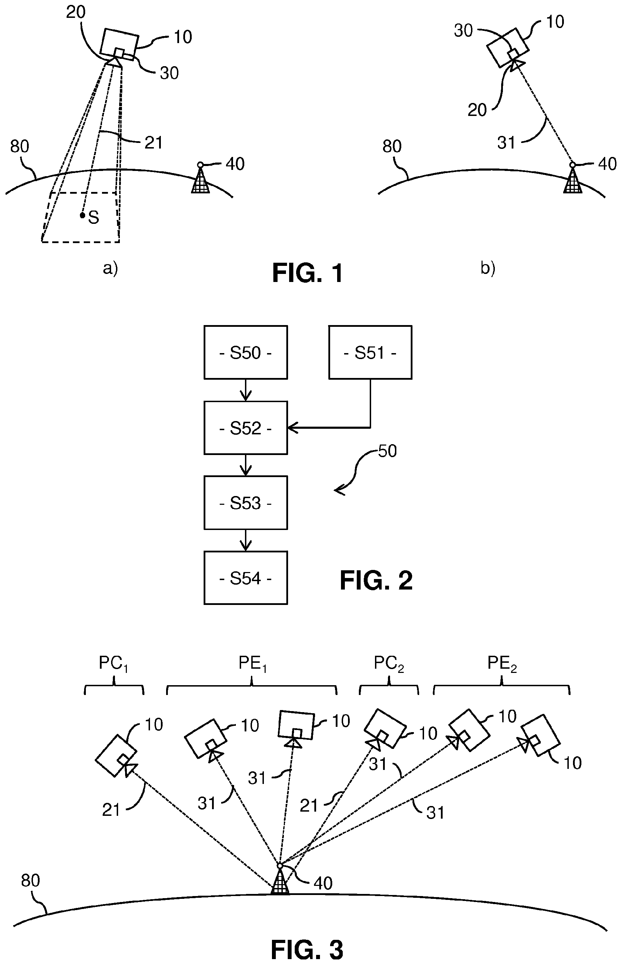

La figure 1 représente schématiquement un engin spatial en orbite défilante (c'est-à-dire une orbite non géostationnaire) autour de la Terre 80. De préférence, l'engin spatial est placé sur une orbite circulaire, d'altitude de préférence inférieure à 2000 km, voire inférieure à 1000 km. Rien n'exclut cependant, suivant d'autres exemples, de considérer d'autres types d'orbites, notamment des orbites elliptiques.

Dans l'exemple illustré par la figure 1, l'engin spatial est un satellite 10. Rien n'exclut cependant, suivant d'autres exemples non détaillés, de considérer d'autres types d'engins spatiaux (navette spatiale, sonde, etc.).

Ledit satellite 10 défile sur son orbite circulaire autour de la Terre 80 avec une vitesse de défilement au sol Vₛₒₗ. Par exemple, le satellite 10 défile sur une orbite circulaire d'altitude sensiblement égale à 500 km avec une vitesse de défilement au sol sensiblement égale à 7 km.s⁻¹.

Le satellite 10 comporte un instrument d'observation 20 pour acquérir des images de parties de la surface de la Terre 80.

Par « acquisition » d'une partie de la surface de la Terre 80, on fait référence ici à la mesure, au cours d'un intervalle de temps de durée prédéterminée, d'un flux optique reçu de ladite partie de la surface de la Terre 80 par ledit instrument d'observation 20.

L'instrument d'observation 20 comporte, de manière connue en soi, des moyens d'acquisition configurés pour capter le flux optique provenant de la surface de la Terre 80. En particulier, l'instrument d'observation 20 comporte au moins un capteur matriciel 24 comportant une pluralité de cellules d'acquisition (pixels) organisées en plusieurs lignes et plusieurs colonnes. Dans la présente description, on considère de manière nullement limitative que chaque ligne s'étend transversalement à la direction de défilement, tandis que chaque colonne s'étend sensiblement suivant ladite direction de défilement. L'instrument d'observation 20 comporte également une optique comportant un ou plusieurs miroirs agencés pour réfléchir le flux optique provenant de la surface de la Terre 80 en direction dudit capteur matriciel 24, agencé au niveau d'un plan focal PF de l'optique dudit instrument d'observation 20.

L'instrument d'observation 20 est associé à une ligne de visée optique 21 (partie a) de la figure 1). Ladite ligne de visée optique 21 forme la partie sortante du chemin optique de l'instrument d'observation 20 et rencontre la surface de la Terre 80 en un point dit « point au sol » S. Par convention, la ligne de visée optique 21 est définie comme correspondant au chemin optique partant du centre du capteur matriciel 24. La ligne de visée optique 21 est fixe en repère satellite, c'est-à-dire que l'orientation de la ligne de visée optique 21 par rapport à un corps 11 du satellite ne peut pas être modifiée et suit le mouvement du satellite 10 lorsque l'attitude dudit satellite 10 est modifiée.

L'instrument d'observation 20 est également associé à un champ de vision fixe en repère satellite. Ce champ de vision fixe correspond à l'ouverture angulaire de l'instrument d'observation 20 et des cellules d'acquisition du capteur matriciel 24. On note par ailleurs que par « fixe », on fait référence ici au fait que la ligne de visée optique 21 est fixe en repère satellite et qu'en outre l'ouverture angulaire est de taille invariable. Le champ de vision de l'instrument d'observation 20 forme une empreinte au sol de longueur L suivant la direction de défilement. La longueur de l'empreinte au sol peut varier avec l'incidence de la ligne de visée optique 21 sur la surface de la Terre 80, et la longueur L correspond à la longueur minimale de l'empreinte au sol, qui est obtenue avec un pointage Nadir de la ligne de visée optique 21. Toutefois, les acquisitions d'images ne sont pas nécessairement effectuées avec un pointage Nadir et peuvent être effectuées avec un pointage quelconque.

De plus, l'instrument d'observation 20 est associé à une résolution spatiale Rₛ prédéterminée. De manière conventionnelle, la résolution spatiale correspond à la taille, par exemple en mètres, du plus petit objet qui peut être détecté dans une scène représentée par une image acquise par l'instrument d'observation 20. Aussi, plus la taille du plus petit objet détectable diminue, plus la résolution spatiale augmente. Par exemple, si la résolution spatiale est égale à 0.5 mètres (m), alors le plus petit élément de surface de la Terre 80 qu'un pixel du capteur peut représenter est d'aire 0.25 m². Rien n'exclut de considérer d'autres valeurs de résolution spatiale. De préférence, la résolution spatiale Rₛ est inférieure à deux mètres (2 m), voire inférieure au mètre (1 m). Comme pour la longueur L, la résolution spatiale peut varier avec l'incidence de la ligne de visée optique 21 sur la surface de la Terre 80. La résolution spatiale Rₛ correspond ici à la résolution spatiale de l'instrument d'observation 20 obtenue avec un pointage Nadir (et au périgée de l'orbite dans le cas d'une orbite elliptique). La résolution spatiale Rₛ est inférieure à la longueur L et est préférentiellement significativement inférieure à ladite longueur L, par exemple d'un facteur au moins 5000, voire au moins 10000.

Le satellite 10 comporte également un module d'émission laser 30 pour émettre des données sous la forme d'un rayonnement laser. Les données à émettre sous la forme d'un rayonnement laser comportent notamment des images de la surface de la Terre 80 acquises par l'instrument d'observation 20. Ces données sont émises à destination d'un module de réception laser 40, qui se trouve dans une station sol à la surface de la Terre 80 dans l'exemple non limitatif de la figure 1. Evidemment, plusieurs modules de réception laser 40 peuvent être prévus, par exemple distribués à la surface de la Terre 80 pour augmenter les opportunités de transférer des données vers le sol. Il est également possible de considérer un ou plusieurs modules de réception laser 40 embarqués dans d'autres satellites, par exemple en orbite géostationnaire (GEO). La liaison entre le module d'émission laser 30 et un module de réception laser 40 est généralement désignée par « liaison laser ».

Le module d'émission laser 30 comporte, de manière connue en soi, une source de rayonnement laser et des moyens adaptés à moduler le rayonnement laser en fonction des données à émettre.

Le module d'émission laser 30 est associé à une ligne de visée laser 31 (partie b) de la figure 1) fixe en repère satellite, comme la ligne de visée optique 21. En outre, les lignes de visée optique 21 et laser 31 sont liées en ce que le module d'émission laser 30 est intégré dans l'instrument d'observation 20, de sorte que le module d'émission laser 30 utilise tout ou partie d'une optique de l'instrument d'observation 20. Par exemple, le module d'émission laser 30 est situé au plan focal PF de l'instrument d'observation 20, comme le capteur matriciel 24. D'autres exemples sont également décrits ci-après. Il est à noter que les lignes de visée optique 21 et 31 peuvent être différentes l'une de l'autre, ou bien confondues l'une avec l'autre, suivant les exemples.

Du fait de cette intégration du module d'émission laser 30 dans l'instrument d'observation 20, les lignes de visée optique 21 et laser 31 sont essentiellement soumises à la même erreur de pointage. Ainsi, il est possible d'estimer l'erreur de pointage au moyen du capteur matriciel 24, et d'utiliser l'erreur de pointage ainsi estimée pour la corriger lors du contrôle du pointage de la ligne de visée laser 31 lors des émissions de données.

La figure 2 représente schématiquement les principales étapes d'un procédé 50 d'émission de données par le satellite 10, au moyen du module d'émission laser 30.

Tel qu'illustré par la figure 2, le procédé 50 d'émission comporte une étape S50 d'acquisition, par le capteur matriciel 24, d'une image d'une zone dite de calibration, dite image de calibration. La zone de calibration est une zone prédéterminée, par exemple une zone à la surface de la Terre 80 ou une zone de ciel sur fond d'étoiles, pour laquelle des données de référence peuvent être obtenues au cours d'une étape S51. Ces données de référence, dont des exemples seront décrits plus en détail ci-après, sont des données déductibles d'une image représentant la zone de calibration, et correspondent aux valeurs attendues pour ces données en l'absence d'erreur de pointage.

Par exemple, un point de consigne prédéterminé est associé à la zone de calibration, et l'attitude du satellite 10 peut être contrôlée pour orienter la ligne de visée optique 21 vers ce point de consigne. Le capteur matriciel 24 réalise ensuite l'acquisition de l'image de calibration, qui est donc une représentation de la zone de calibration réalisée en faisant pointer la ligne de visée optique 21 vers le point de consigne. En présence d'une erreur de pointage, que l'on cherche à estimer, le point effectivement visé par la ligne de visée optique 21 est distinct du point de consigne, et l'image de calibration diffère de ce qu'elle serait en l'absence d'erreur de pointage.

Dans des modes préférés de mise en oeuvre, la zone de calibration étant une zone à la surface de la Terre 80, l'acquisition de l'image de calibration est réalisée pendant une durée dite d'immobilisation supérieure à Rₛ/Vₛₒₗ pendant laquelle l'attitude du satellite 10 est contrôlée de sorte qu'une empreinte au sol du champ de vision est maintenue immobile à la surface de la Terre 80. De telles dispositions permettent d'éviter les effets de filé dans l'image de calibration. De préférence, la durée d'immobilisation est significativement supérieure à Rₛ/Vₛₒₗ (facteur 100 voire 1000), car cela contribue à améliorer significativement le SNR de l'image de calibration.

Tel qu'illustré par la figure 2, le procédé 50 d'émission comporte ensuite une étape S52 de détermination de l'erreur de pointage de la ligne de visée laser par comparaison de l'image de calibration et des données de référence. Il est à noter que cette comparaison peut être directe (par exemple si les données de référence correspondent à une image de référence de la zone de calibration considérée) ou indirecte (par exemple un pré-traitement doit être appliqué préalablement à l'image de calibration et/ou aux données de référence). Les données de référence étant représentatives des valeurs attendues en l'absence d'erreur de pointage, l'écart entre les données de référence et les données correspondantes déduites de l'image de calibration est donc représentatif de l'erreur de pointage, et cet écart peut être utilisé pour estimer ladite erreur de pointage. L'erreur de pointage peut être estimée sous différentes formes, par exemple comme une erreur d'attitude en roulis et une erreur d'attitude en tangage, ou encore comme un vecteur reliant le point de consigne au point réellement visé du fait de l'erreur de pointage, etc.

Après avoir estimé l'erreur de pointage, le procédé 50 d'émission comporte une étape S53 de contrôle du pointage du satellite 10 en fonction de l'erreur de pointage, pour faire pointer la ligne de visée laser 31 vers un module de réception laser 40. En d'autres termes, l'orientation de la ligne de visée laser 31 est contrôlée pour compenser l'erreur de pointage estimée. Suivant un exemple non limitatif, si le satellite 10 doit être placé, en l'absence d'erreur de pointage, dans une attitude de consigne (Aᵣ₀), Aₜ₀) (Aᵣ₀ étant la consigne en roulis et Aₜ₀ d'attitude en tangage) pour orienter la ligne de visée laser 31 vers le module de réception laser 40, et si l'erreur de pointage estimée correspond à une erreur d'attitude en roulis δAᵣ et une erreur d'attitude en tangage δAₜ, alors il est possible de considérer une attitude de consigne modifiée (Aᵣ₀ - δAᵣ, Aₜ₀-δAₜ) pour orienter la ligne de visée laser 31 en compensant l'erreur de pointage.

La ligne de visée laser 31 étant orientée vers le module de réception laser 40, le procédé 50 d'émission comporte ensuite une étape S54 d'émission des données par le module d'émission laser 30 à destination dudit module de réception laser 40, via la liaison laser. Tel qu'indiqué précédemment, les données peuvent comporter, notamment un ou plusieurs images acquises par le capteur matriciel 24 dans le cadre de la mission d'observation du satellite 10.

Il est à noter que, pendant toute la durée de l'étape S54 d'émission de données, l'attitude du satellite 10 est contrôlée afin de maintenir la ligne de visée laser 31 orientée vers le module de réception laser 40. Si on considère par exemple un module de réception laser 40 intégré dans une station sol immobile à la surface de la Terre 80, cela signifie donc que le pointage de la ligne de visée laser 31 doit être maintenu immobile à la surface de la Terre 80 pendant toute la durée de l'étape S54 d'émission de données. Par « maintenir immobile », on entend que la consigne d'attitude du satellite est déterminée pour maintenir le point visé par la ligne de visée laser 31 sensiblement immobile sur le module de réception laser 40, lui-même immobile à la surface de la Terre 80, malgré le défilement du satellite 10. Par « sensiblement immobile », on entend que l'objectif du contrôle d'attitude est de maintenir le point visé par la ligne de visée laser 31 immobile, mais que celui-ci peut varier légèrement pendant la durée de l'étape S54 d'émission, du fait par exemple d'erreurs de contrôle d'attitude et/ou de bruits de mesure. Du fait d'un tel contrôle d'attitude, on comprend que l'incidence de la ligne de visée laser 31 sur la surface de la Terre 80 varie pendant la durée de l'étape S54 d'émission. Par exemple, si l'incidence de la ligne de visée laser 31 est sensiblement normale à la surface de la Terre 80 au début de l'étape S54 d'émission, alors l'incidence de ladite ligne de visée laser 31 sur ladite surface de la Terre 80 sera légèrement oblique à la fin de l'étape S54 d'émission, pour compenser le défilement du satellite 10. Ainsi, la consigne d'attitude donnée varie au cours de l'étape S54 d'émission et vise notamment à stopper le défilement de la ligne de visée laser 31 au sol.

Il est à noter que, l'erreur de pointage étant susceptible de dériver au cours du temps, il est préférable de réduire la durée entre l'estimation de l'erreur de pointage et l'émission des données. Dans des modes préférés de mise en oeuvre, la zone de calibration est située à proximité du module de réception laser 40, afin de limiter la durée de la manoeuvre nécessaire pour passer d'un pointage de la ligne de visée optique 21 sur le point de consigne associé à la zone de calibration à un pointage de la ligne de visée laser 31 sur le module de réception laser 40. Dans certains modes de mise en oeuvre, le point de consigne associé à la zone de calibration et le module de réception laser 40 peuvent être confondus, en particulier si la ligne de visée optique 21 et la ligne de visée laser 31 sont confondues.

Par conséquent, si le module de réception laser 40 est intégré dans une station sol à la surface de la Terre 80, alors la zone de calibration est de préférence une zone terrestre associée à ladite station sol, c'est-à-dire une zone terrestre prédéterminée comportant ladite station sol ou à proximité de celle-ci. Si le module de réception laser 40 est embarqué dans un autre engin spatial, par exemple un autre satellite en orbite GEO, la zone de calibration est de préférence une zone de ciel associée audit autre satellite, c'est-à-dire une zone de ciel à l'arrière-plan de l'autre satellite par rapport à l'instrument d'observation 20 ou décalée par rapport audit autre satellite.

Alternativement ou en complément, le satellite 10 dispose, dans des modes préférés de réalisation, de capacités de formation de couple élevées, en particulier par rapport à l'inertie dudit satellite 10, afin de pouvoir réaliser les manoeuvres éventuelles de manière très rapide, et ainsi limiter la durée entre l'estimation de l'erreur de pointage et l'émission des données.

Dans certains cas, la dérive de l'erreur de pointage peut être non négligeable pendant la durée nécessaire pour émettre l'ensemble des données à émettre, par exemple si l'erreur de pointage dérive rapidement et/ou si la quantité de données à émettre est importante. Dans cas, il peut être nécessaire d'effectuer un suivi de l'erreur de pointage.

Ainsi, dans des modes préférés de mise en oeuvre, les étapes du procédé 50 d'émission sont itérées pour l'émission de données vers un même module de réception laser 40, afin de réaliser un suivi de l'erreur de pointage à partir d'une pluralité d'images de calibration acquises successivement au cours de la même émission de données. Dans ce cas, l'émission de données vers un même module de réception laser 40 peut être décomposée en une alternance de phases de calibration et de phases d'émission :
- une phase de calibration regroupe les étapes du procédé 50 d'émission relatives à l'estimation de l'erreur de pointage, à savoir l'étape S50 d'acquisition d'une image de calibration (y compris le contrôle de pointage pour orienter la ligne de visée optique vers la zone de calibration considérée), l'étape S51 d'obtention de données de référence et l'étape S52 d'estimation de l'erreur de pointage,
- une phase d'émission regroupe les étapes du procédé 50 d'émission relatives à l'émission de données, à savoir l'étape S53 de contrôle de pointage en fonction de l'erreur de pointage et l'étape S54 d'émission de données.

Les données dont émises vers un même module de réception laser 40, de sorte que l'étape S53 de contrôle de pointage de chaque phase d'émission vise à orienter la ligne de visée laser 31 vers ce module de réception laser 40. Pour cette émission de données vers un même module de réception laser 40, les phases de calibration peuvent toutes acquérir des images de calibration de la même zone de calibration, ou bien acquérir des images de calibration de zones de calibration différentes.

La figure 3 représente schématiquement le satellite 10 en train de réaliser une émission de données vers un module de réception laser 40 à la surface de la Terre 80. Tel qu'illustré par la figure 3, l'émission de données est décomposée en deux phases d'émission PE₁ et PE₂ précédées par des phases de calibration respectives PC₁ et PC₂.

Le procédé 50 d'émission comporte tout d'abord une première phase de calibration PC₁ visant à réaliser une première estimation de l'erreur de pointage. Au cours de la première phase de calibration PC₁, le capteur matriciel 24 acquiert une première image de calibration d'une première zone de calibration, obtient les premières données de référence associées et en déduit la première estimation de l'erreur de pointage.

Le procédé 50 d'émission comporte ensuite une première phase d'émission PE₁ visant à émettre des données à destination du module de réception laser 40. Au cours de la première phase d'émission PE₁, la ligne de visée laser 31 est orientée vers le module de réception laser 40 en tenant compte de la première estimation de l'erreur de pointage, et des données sont émises par le module d'émission laser 30 en maintenant le pointage de la ligne de visée laser 31 immobile sur le module de réception laser 40.

Le procédé 50 d'émission comporte ensuite une seconde phase de calibration PC₂ visant à réaliser une seconde estimation de l'erreur de pointage. Au cours de la seconde phase de calibration PC₂, le capteur matriciel 24 acquiert une seconde image de calibration d'une seconde zone de calibration (qui peut être la même que la première zone de calibration), obtient les secondes données de référence associées (si nécessaire) et en déduit la seconde estimation de l'erreur de pointage.

Le procédé 50 d'émission comporte ensuite une seconde phase d'émission PE₂ visant à poursuivre l'émission des données à destination du module de réception laser 40. Au cours de la seconde phase d'émission PE₂, la ligne de visée laser 31 est orientée vers le module de réception laser 40 en tenant compte de la seconde estimation de l'erreur de pointage, et des données sont émises par le module d'émission laser 30 en maintenant le pointage de la ligne de visée laser 31 immobile sur le module de réception laser 40.

On décrit à présent des exemples non limitatifs de zones de calibration et de données de référence associées qui peuvent être utilisées pour estimer l'erreur de pointage du module d'émission laser 30.

Suivant un premier exemple, les données de référence associées à une zone de calibration correspondent à une image théorique de ladite zone de calibration. Cette image théorique représente l'image de la zone de calibration qui aurait dû être obtenue par le satellite 10, en l'absence d'erreur de pointage, lors de l'acquisition de l'image de calibration.

En effet, à partir d'une image géoréférencée de la zone de calibration (acquise préalablement, par exemple par le capteur matriciel 24 du satellite 10 au cours d'un survol précédent de la zone de calibration), il est possible de positionner sur cette image géoréférencée l'empreinte au sol théorique du champ de vision du capteur matriciel 24 lors de l'acquisition de l'image de calibration (compte tenu de la position du satellite 10 sur son orbite et du point de consigne visé lors de cette acquisition, et éventuellement d'un modèle numérique de terrain de la zone de calibration). L'intersection entre l'empreinte au sol théorique et l'image géoréférencée correspond donc à une image théorique de la zone de calibration. En l'absence d'erreur de pointage, l'image de calibration devrait être sensiblement identique à cette image théorique. Le recalage de l'image de calibration avec l'image théorique, qui peut mettre en oeuvre toute méthode connue de l'homme du métier, permet de mettre en correspondance les pixels de ces images, c'est-à-dire permet d'identifier les pixels de ces images qui représentent la même portion de la zone de calibration. La comparaison des positions dans les images des pixels représentant une même portion de la zone de calibration peut être utilisée pour estimer l'erreur de pointage affectant l'acquisition de l'image de calibration.

Suivant un autre exemple, les données de référence comportent une position théorique dans l'image de calibration d'un élément caractéristique de la zone de calibration. Par « élément caractéristique » on entend un élément qui peut être détecté dans l'image de calibration, par exemple parce qu'il doit présenter dans l'image de calibration une forme caractéristique ou, de préférence, parce qu'il se traduit dans l'image de calibration par un ou plusieurs pixels présentant des valeurs caractéristiques. Par exemple, à partir des coordonnées géographiques de l'élément caractéristique dans la zone de calibration, il est possible d'estimer la position théorique dans l'image de calibration de cet élément caractéristique (compte tenu de la position du satellite 10 sur son orbite et du point de consigne visé lors de cette acquisition, et éventuellement d'un modèle numérique de terrain de la zone de calibration). La position réelle de l'élément caractéristique dans l'image de calibration peut être estimée en détectant ledit élément caractéristique dans l'image de calibration. La comparaison de la position théorique et de la position réelle de l'élément caractéristique dans l'image de calibration peut alors être utilisée pour estimer l'erreur de pointage sur l'acquisition de l'image de calibration.

Dans des modes préférés de mise en oeuvre, l'élément caractéristique est une source lumineuse, qui émet un rayonnement lumineux qui conduit à des valeurs caractéristiques du ou des pixels qui représentent ladite source lumineuse dans l'image de calibration.

Si la zone de calibration est survolée pendant la nuit, par exemple lorsque la Terre se trouve entre le satellite 10 et le Soleil, alors le rayonnement lumineux émis par la source lumineuse est par exemple un rayonnement dans le domaine de longueurs d'ondes visibles. En effet, la zone de calibration n'étant pas éclairée par le Soleil, un rayonnement lumineux de forte intensité, même dans le domaine de longueurs d'ondes visibles, pourra être détecté dans l'image de calibration, d'autant plus que sa position théorique dans ladite image de calibration est connue.

Si la zone de calibration est survolée pendant le jour, c'est-à-dire que ladite zone de calibration est éclairée par le Soleil, alors le rayonnement lumineux émis par la source lumineuse est de préférence un rayonnement dans le domaine de longueurs d'ondes non-visibles, par exemple un rayonnement infrarouge tel qu'un rayonnement en infrarouge proche (« near infrared » ou NIR). En effet, étant donné que la zone de calibration est éclairée par le Soleil, il sera plus facile de détecter un rayonnement dans le domaine de longueurs d'ondes non-visibles, tel qu'un rayonnement NIR. Cela suppose évidemment que le capteur matriciel 24 est également sensible dans le domaine de longueurs d'ondes non-visibles utilisé par la source lumineuse.

De préférence le rayonnement lumineux émis par la source lumineuse est un rayonnement laser. Un tel rayonnement laser peut être détecté de manière plus précise dans l'image de calibration, ce qui permet d'améliorer la précision sur l'estimation de l'erreur de pointage. Par exemple, la source lumineuse est un module d'émission laser, qui peut être colocalisé avec le module de réception laser 40, utilisé pour émettre des données à destination du satellite 10 (qui comporte le cas échéant un module de réception laser).

Suivant un autre exemple, la zone de calibration est une zone de ciel de sorte que l'image de calibration représente des étoiles se trouvant dans le champ de vision du capteur matriciel 24, et les données de référence sont déterminées à partir d'un catalogue d'étoiles. De manière connue en soi, un catalogue d'étoiles comporte des informations permettant de connaître les positions de certaines étoiles, par exemples les éphémérides de ces étoiles. Le capteur matriciel 24 de l'instrument d'observation 20 est donc utilisé comme un senseur stellaire. Par exemple, il est possible d'estimer l'attitude du satellite 10 à partir des positions des étoiles dans l'image de calibration. L'erreur de pointage peut alors estimée, par exemple, en comparant l'attitude estimée avec l'attitude mesurée par d'autres capteurs d'attitude du satellite 10. Il est également possible de déterminer, à partir du catalogue d'étoiles, les positions théoriques des étoiles dans l'image de calibration. L'erreur de pointage peut alors être estimée, par exemple, en comparant les positions réelles desdites étoiles dans l'image de calibration avec leurs positions théoriques.

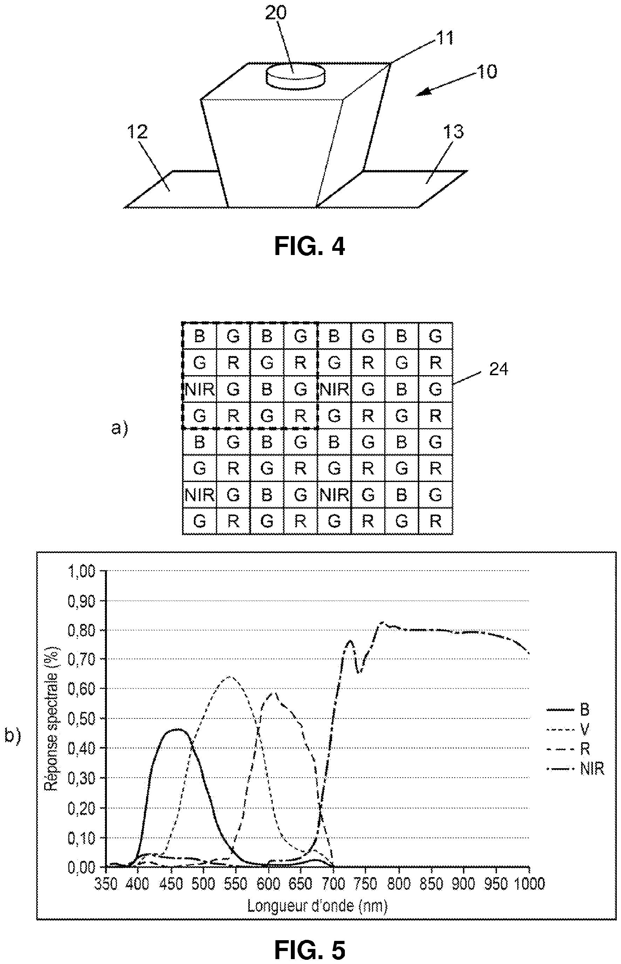

La figure 4 représente schématiquement un exemple de réalisation d'un satellite 10 pour la mise en oeuvre du procédé 50 d'émission.

Tel qu'illustré par la figure 4, le satellite 10 comporte deux générateurs solaires 12, 13 agencés sur des faces respectives opposées d'un corps 11 dudit satellite 10. L'instrument d'observation 20 est agencé sur une face reliant lesdites faces portant les générateurs solaires 12, 13.

Le satellite 10 comporte également des moyens de contrôle d'attitude (non représentés sur les figures), tels que des actionneurs inertiels. Lesdits moyens de contrôle d'attitude présentent une capacité Ct de formation de couple en tangage et une capacité Cᵣ de formation de couple en roulis. En d'autres termes, Ct (resp. Cᵣ) correspond à la valeur maximale que peut prendre un couple en tangage (resp. en roulis) formé par les moyens de contrôle d'attitude du satellite 10.

En outre, l'inertie en tangage du satellite 10 est désignée It et l'inertie en roulis du satellite 10 est désignée Iᵣ.

Le satellite 10 comporte en outre un circuit de traitement (non représenté sur les figures), qui contrôle le fonctionnement de l'instrument d'observation 20, du module d'émission laser 30 et des moyens de contrôle d'attitude. Le circuit de traitement comporte par exemple un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les différentes étapes du procédé 50 d'émission. Alternativement ou en complément, le circuit de traitement comporte un ou des circuits logiques programmables (FPGA, PLD, etc.), et/ou un ou des circuits intégrés spécialisés (ASIC, etc.), et/ou un ensemble de composants électroniques discrets, etc., adaptés à effectuer tout ou partie desdites étapes du procédé 50 d'émission.

En d'autres termes, le circuit de traitement correspond à des moyens configurés de façon logicielle (produit programme d'ordinateur spécifique) et/ou matérielle (FPGA, PLD, ASIC, composants électroniques discrets, etc.) pour effectuer tout ou partie des étapes du procédé 50 d'émission, par un contrôle adapté de l'instrument d'observation 20, du module d'émission laser 30 et des moyens de contrôle d'attitude.

Il est à noter que le satellite 10 peut également comporter, de manière conventionnelle, d'autres éléments tels que des capteurs (senseur stellaire, gyromètre, etc.), qui peuvent être également reliés au circuit de traitement.

Dans des modes préférés de réalisation, le rapport Cₜ/Iₜ est supérieur à 0.01 s⁻², voire supérieur à 0.018 s⁻². Par exemple, la capacité Ct de formation couple en tangage est supérieure à 0.8 Newton mètre (N·m) et l'inertie en tangage It est inférieure à 80 kg·m². Dans des modes préférés de réalisation, la capacité Ct de formation couple en tangage est supérieure à 1 N·m et l'inertie en tangage It est inférieure à 60 kg·m².

En considérant un satellite 10 présentant un rapport Cₜ/Iₜ élevé, il est possible de réaliser des manoeuvres rapides. En particulier, si le passage d'une orientation de la ligne de visée optique 21 vers une zone de calibration (phase de calibration) vers une orientation de la ligne de visée laser 31 vers le module de réception laser 40 (phase d'émission) nécessite une manoeuvre en tangage, un rapport Cₜ/Iₜ élevé permet de limiter la durée de celle-ci, ce qui permet notamment de limiter la dérive éventuelle de l'erreur de pointage entre l'instant où elle est estimée (phase de calibration) et l'instant où elle est utilisée (phase d'émission). Il est à noter que tout ce qui a été dit précédemment pour la capacité Ct en tangage et le rapport Cₜ/Iₜ est également applicable pour la capacité Cᵣ en roulis et le rapport Cᵣ/Iᵣ, notamment.

Dans des modes préférés de réalisation, les moyens de contrôle d'attitude comportent une ou plusieurs roues à réaction récupératrices d'énergie électrique. De telles roues à réaction récupératrices d'énergie électrique sont connues de la demande de brevet EP 2247505 A1, notamment.

L'utilisation de roues à réaction récupératrices d'énergie électrique est particulièrement avantageuse pour les raisons suivantes. Tout d'abord, il convient de noter que, pour fournir une capacité de couple en tangage (resp. en roulis) élevée (supérieure à 0.8 N·m voire supérieure à 1 N·m) au moyen de roues à réaction, il est nécessaire d'utiliser des roues à réaction assez massives, ce qui tend à augmenter l'inertie en tangage It (resp. Iᵣ) du satellite 10. Toutefois, avec des roues à réaction récupératrices d'énergie électrique, en particulier telles que décrites dans la demande de brevet EP 2247505 A1, il est possible de réduire la masse requise, à capacité de couple équivalente, par rapport aux roues à réaction non-récupératrices d'énergie électrique. En outre, du fait que les roues à réaction sont récupératrices d'énergie électrique, les besoins en énergie électrique du satellite 10 sont réduits. Il est notamment possible de réduire les dimensions et la masse des générateurs solaires 12, 13, ce qui permet de réduire l'inertie du satellite 10. Ainsi, l'augmentation en masse éventuellement nécessaire pour avoir une capacité de couple importante (bien que moindre avec des roues à réaction récupératrices d'énergie électrique qu'avec des roues à réaction non-récupératrices d'énergie électrique) peut être compensée au moins en partie par une réduction de la masse et des dimensions des générateurs solaires 12, 13.

Dans des modes particuliers de réalisation, les moyens de contrôle d'attitude comportent un ou plusieurs actionneurs gyroscopiques (« Control Moment Gyroscope » ou CMG dans la littérature anglo-saxonne).

L'utilisation d'actionneurs gyroscopiques est particulièrement avantageuse du fait que ceux-ci présentent un rapport (capacité en couple / masse) élevé. Ainsi, il est possible d'avoir une capacité de couple élevée sans pénaliser l'inertie du satellite 10.

Tel qu'indiqué précédemment, l'instrument d'observation 20 comporte au moins un capteur matriciel 24, par exemple de type CMOS (acronyme de l'expression anglo-saxonne « Complementary Metal-Oxyde-Semiconductor »). Il est cependant à noter que l'instrument d'observation 20 peut comporter plusieurs capteurs matriciels 24. Par exemple, plusieurs capteurs matriciels peuvent être mis en oeuvre pour acquérir des images dans des longueurs d'ondes respectives différentes (rouge, vert, bleu, proche infrarouge, etc.), etc.

Dans des modes préférés de réalisation, l'instrument d'observation 20 comporte un filtre de Bayer. Un filtre de Bayer, de manière connue en soi, permet d'acquérir des images en couleur dans des longueurs d'ondes respectives différentes rouge, vert et bleu (« Red, Green, Blue » ou RGB dans la littérature anglo-saxonne) avec un même capteur matriciel 24. De telles dispositions permettent de simplifier l'instrument d'observation 20.

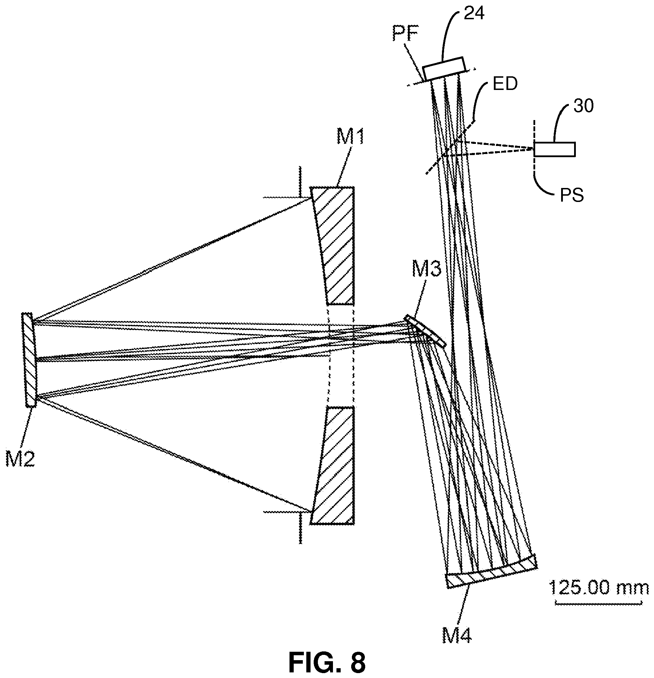

Dans certains modes de réalisation, il est possible de modifier le filtre de Bayer pour y inclure du proche infrarouge. Un exemple d'un tel filtre modifié est présenté de manière schématique sur la figure 5. Plus particulièrement, la partie a) de la figure 5 représente un capteur matriciel 24 comportant plusieurs jeux de cellules d'acquisition, sensibles respectivement dans les longueurs d'ondes rouge (désignées par R sur la figure 8), vert (G), bleu (B) et proche infrarouge (NIR). Dans cet exemple, le capteur matriciel 24 comporte 16x16 cellules d'acquisition, et peut être étendu à un nombre plus grand de cellules d'acquisition en répétant par exemple le motif de 4 x 4 cellules d'acquisition se trouvant dans la partie supérieure gauche (entouré par un trait discontinu). La partie b) de la figure 5 représente les réponses spectrales des différents filtres associées respectivement aux longueurs d'ondes rouge (R), vert (G), bleu (B) et proche infrarouge (NIR). Il est également possible, suivant d'autres exemples, d'avoir plusieurs plans focaux, dont un plan focal avec un capteur matriciel et un filtre de Bayer classique (formant une matrice de Bayer) et un autre plan focal avec au moins un autre capteur matriciel et un autre filtre, par exemple en proche infrarouge. Enfin, rien n'empêche d'éclater le plan focal suivant des filtres respectifs adaptés à une mission particulière ou à utiliser un plan focal unique sans filtre.

Dans des modes préférés de réalisation, l'instrument d'observation 20 est configuré pour activer successivement des cellules d'acquisition lors de l'acquisition d'une image. Un tel mode d'acquisition est connu sous le nom de « rolling shutter acquisition mode » dans la littérature anglo-saxonne. De telles dispositions, particulièrement adaptées aux très grands capteurs matriciels, permettent de limiter la quantité de données devant être traitées simultanément par l'instrument d'observation 20, puisque les cellules d'acquisition ne sont pas toutes activées simultanément.

Outre un ou plusieurs capteurs matriciels 24, l'instrument d'observation 20 peut comporter d'autres éléments, comme par exemple une optique comportant un ou plusieurs miroirs, une ou plusieurs lentilles, une structure de support, des composants électroniques, etc.

Dans des modes préférés de réalisation, l'instrument d'observation 20 comporte au moins deux miroirs fixes en repère engin spatial, et le module d'émission laser 30 émet un rayonnement laser suivant la ligne de visée laser 31 via aux moins deux miroirs de l'instrument d'observation 20. Ainsi, alors que les miroirs sont mis en oeuvre pour réfléchir successivement un flux optique reçu de la surface de la Terre 80 en direction du capteur matriciel 24, tout ou partie de ces miroirs sont également utilisés pour réfléchir dans le sens inverse le rayonnement laser émis par le module d'émission laser 30. L'instrument d'observation 20 et le module d'émission laser 30 sont donc structurellement liés l'un à l'autre, et sont donc soumis aux même erreurs de pointage. Ils peuvent être vus comme correspondant à un seul et même équipement pour les opérations de contrôle de pointage.

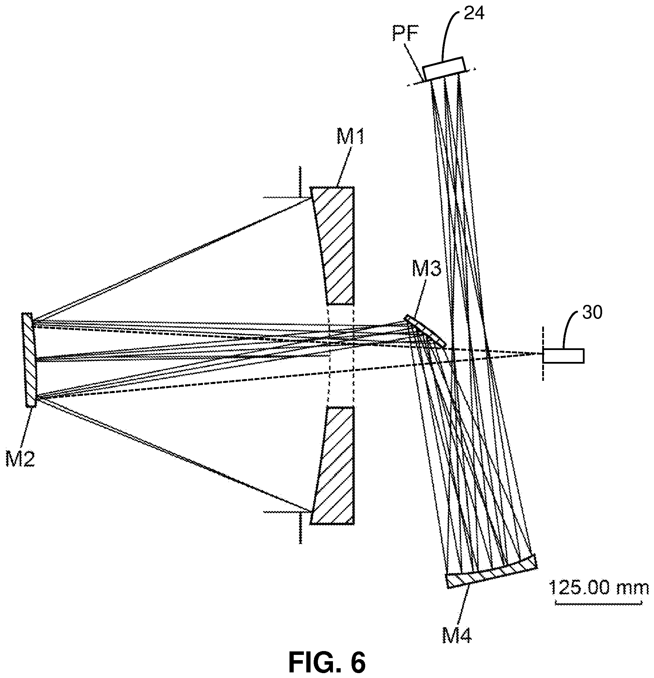

Les figures 6 à 8 représentent des exemples non limitatifs de réalisation dans lesquels des miroirs de l'instrument d'observation 20 sont utilisés par la module d'émission laser 30. Il est à noter que les figures 6 à 8 sont représentées à l'échelle, mais uniquement pour les différents miroirs et leurs positions respectives.

Dans les figures 6 à 8, l'optique de l'instrument d'observation 20 est de type Korsch, ce qui permet d'avoir à la fois une grande compacité et une faible masse, avec une focale élevée. Tel qu'illustré par les figures 6 à 8, l'optique de Korsch comporte un miroir M1 de 480 mm, un miroir M2 de 160 mm, un miroir de repli M3 et un miroir M4. Le flux optique incident est donc successivement réfléchi par le miroir M1, le miroir M2 (à travers le miroir M1), le miroir de repli M3 et le miroir M4, jusqu'à atteindre le plan focal PF au niveau duquel se trouve le capteur matriciel 24 de l'instrument d'observation 20.

Avec une telle optique de Korsch, il peut être conçu un instrument d'observation d'environ 80 kg, embarqué dans un satellite d'environ 300 kg. Le plan focal peut comporter par exemple un ou plusieurs capteurs matriciels, chaque capteur matriciel comportant 14192 x 10140 cellules d'acquisition (pixels), par exemple selon le modèle IMX 411 commercialisé par Sony^{®}. Pour un satellite en orbite à 500 km d'altitude, cela permet d'atteindre une résolution de 0.5 m, avec une longueur L de 5 km. Par exemple, le corps 11 du satellite a une dimension 1.53 x 1.14 x 1.0 m. Deux générateurs solaires 12, 13 de 1 m² assurent une puissance de 250 W suffisante pour les besoins du satellite. Grâce à cette compacité, les inerties Iₓₓ, I_{yy}, I_{zz} selon les trois axes X, Y, Z du repère satellite sont faibles : (Iₓₓ, I_{yy}, I_{zz}) = (57, 76, 77) kg·m². Sur orbite, l'attitude est du satellite 10 est par exemple contrôlée autour d'une attitude de référence dans laquelle l'axe X est colinéaire avec l'axe de roulis et l'axe Y est colinéaire avec l'axe de tangage, auquel cas les inerties Iₓₓ et I_{yy} correspondent respectivement à l'inertie en roulis Iᵣ et à l'inertie en tangage It.

Dans l'exemple illustré par la figure 6, le module d'émission laser 30 est situé en vis-à-vis du miroir M2, au niveau d'un plan focal intermédiaire associé aux miroirs M1 et M2. Le rayonnement laser émis par le module d'émission laser 30 est donc successivement réfléchi par le miroir M2 puis par le miroir M1 à partir duquel il est réfléchi suivant la ligne de visée laser 31.

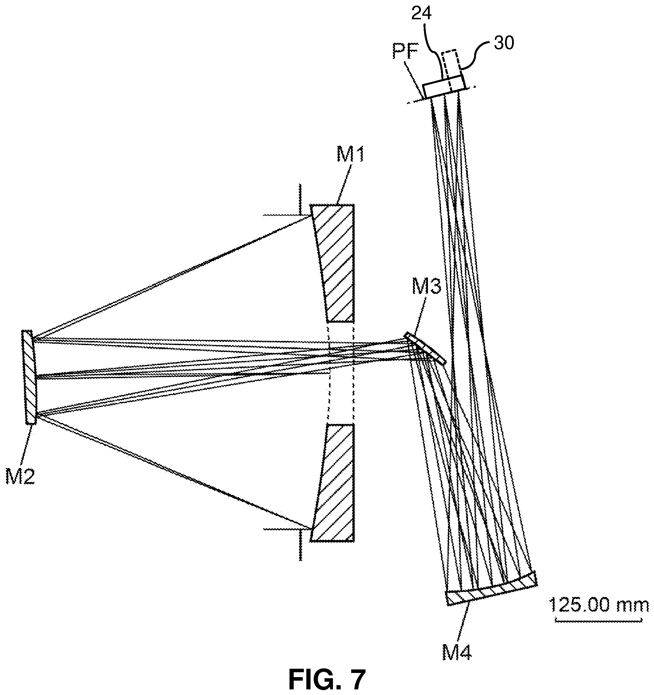

Dans l'exemple illustré par la figure 7, le module d'émission laser 30 est situé au niveau du plan focal PF de l'instrument d'observation 20, à un endroit du plan focal PF qui est décalé par rapport au capteur matriciel 24. Le rayonnement laser émis par le module d'émission laser 30 est donc successivement réfléchi par les miroirs M4, M3, M2 et M1 à partir duquel il est réfléchi suivant la ligne de visée laser 31. Dans cet exemple, les lignes de visée optique 21 et 31 sont nécessairement différentes l'une de l'autre, et la ligne de visée laser 31 ne se trouve pas dans le champ de vision du capteur matriciel 24. Si on considère par exemple le cas où l'image de calibration vise à détecter une source lumineuse qui correspond à un module d'émission laser au sol colocalisé avec le module de réception laser 40, alors il faut nécessairement réaliser une manoeuvre entre l'acquisition de l'image de calibration (le module d'émission laser au sol et le module de réception laser 40 se trouvant dans le champ de vision du capteur matriciel 24) et l'émission de données (la ligne de visée laser 31, en dehors du champ de vision du capteur matriciel 24, étant orientée vers le module de réception laser 40). Dans un tel cas, un rapport Cₜ/Iₜ (resp. Cᵣ/Iᵣ) supérieur à 0.01 s⁻², voire supérieur à 0.018 s⁻², permet de réduire la durée de cette manoeuvre.

Dans l'exemple illustré par la figure 8, le module d'émission laser 30 est situé au niveau d'un plan focal secondaire PS, qui correspond à une duplication du plan focal PF de l'instrument d'observation 20. A cet effet, un élément de duplication ED de plan focal est agencé sur le trajet des rayonnements entre le plan focal PF et le miroir M4. L'élément de duplication ED peut comprendre un miroir ou une lame dichroïque configuré pour réfléchir l'un parmi le rayonnement laser du module d'émission laser 30 et le flux optique issu de la scène observée et pour transmettre sans réflexion l'autre parmi le rayonnement laser et le flux optique. Dans l'exemple illustré par la figure 8, c'est le rayonnement laser qui est réfléchi, de sorte que le rayonnement laser est successivement réfléchi par l'élément de duplication ED puis les miroirs M4, M3, M2 et M1. Dans cet exemple, les lignes de visée optique 21 et 31 peuvent être confondues. Si on considère par exemple le cas où l'image de calibration vise à détecter une source lumineuse qui correspond à un module d'émission laser au sol colocalisé avec le module de réception laser 40, alors le fait de disposer de lignes de visée optique 21 et laser 31 confondues permet de réduire fortement les besoins en termes de manoeuvre entre l'acquisition de l'image de calibration et l'émission des données à destination du module de réception laser 40.

Il est à noter que d'autres configurations sont possibles pour l'optique de l'instrument d'observation 20, qui peut notamment comporter un nombre de miroirs différent du nombre de miroirs (4) représentés sur les figures 6 à 8. Par exemple, l'optique de l'instrument d'observation peut comporter deux miroirs, par exemple agencés comme les miroirs M1 et M2 de la figure 6, le module d'émission laser 30 et le capteur matriciel 24 étant par exemple tous deux situés au niveau du plan focal de l'instrument d'observation 20 (qui correspond dans ce cas au plan focal intermédiaire de la figure 6).

## Revendications

1. Procédé (50) d'émission de données par un engin spatial (10) en orbite défilante autour de la Terre (80), l'engin spatial comportant :
- un instrument d'observation (20) comportant une optique et un capteur matriciel (24) situé à un plan focal (PF) de ladite optique, pour acquérir des images dans le cadre d'une mission d'observation de l'engin spatial, ledit instrument d'observation étant associé à un champ de vision fixe en repère engin spatial et défini par le capteur matriciel (24),
- un module d'émission laser (30) associé à une ligne de visée laser (31) fixe en repère engin spatial, ledit module d'émission laser étant situé au plan focal ou à un plan focal secondaire (PS) de l'optique ou à un plan focal intermédiaire d'une partie de l'optique,
ledit procédé comportant des étapes de :
- (S50) acquisition, par le capteur matriciel, d'une image d'une zone de calibration, dite image de calibration,
- (S51) obtention de données de référence associées à la zone de calibration,
- (S52) détermination d'une erreur de pointage de la ligne de visée laser par comparaison de l'image de calibration et des données de référence,
- (S53) contrôle du pointage de l'engin spatial en corrigeant l'erreur de pointage, pour faire pointer la ligne de visée laser vers un module de réception laser,
- (S54) émission de données par le module d'émission laser à destination du module de réception laser, lesdites données comportant une ou plusieurs images acquises par le capteur matriciel (24) dans le cadre de la mission d'observation de l'engin spatial.

2. Procédé (50) selon la revendication 1, dans lequel les données de référence comportent une image théorique de la zone de calibration.

3. Procédé (50) selon la revendication 2, dans lequel le module de réception laser est intégré dans une station sol et la zone de calibration est une zone terrestre.

4. Procédé (50) selon la revendication 1 ou 2, dans lequel la zone de calibration est une zone de ciel de sorte que l'image de calibration représente des étoiles se trouvant dans le champ de vision du capteur matriciel et les données de référence sont déterminées à partir d'un catalogue d'étoiles.

5. Procédé (50) selon la revendication 4, dans lequel le module de réception laser est embarqué dans un autre engin spatial en orbite terrestre.

6. Procédé (50) selon la revendication 1, dans lequel la zone de calibration comporte une source lumineuse de position prédéterminée et les données de référence comportent une position théorique de la source lumineuse dans l'image de calibration, l'erreur de pointage étant déterminée par comparaison d'une position estimée de la source lumineuse dans l'image de calibration avec la position théorique.

7. Procédé (50) selon la revendication 6, dans lequel la source lumineuse est colocalisée avec le module de réception laser.

8. Procédé (50) selon l'une quelconque des revendications précédentes, dans lequel l'engin spatial ayant une vitesse de défilement au sol Vₛₒₗ et l'instrument d'observation étant associé à une résolution spatiale Rₛ suivant une direction de défilement, l'acquisition de l'image de calibration est réalisée pendant une durée dite d'immobilisation supérieure à Rₛ/Vₛₒₗ pendant laquelle l'attitude de l'engin spatial est contrôlée de sorte qu'une empreinte au sol du champ de vision est maintenue immobile à la surface de la Terre.

9. Procédé (50) selon l'une quelconque des revendications précédentes, dans lequel les étapes du procédé sont itérées pour l'émission de données vers un même module de réception laser, de sorte à alterner des phases de calibration (PC₁, PC₂) et des phases d'émission (PE₁, PE₂), les phases de calibration réalisant l'estimation de l'erreur de pointage et les phases d'émission réalisant l'émission de données vers le même module de réception laser.

10. Engin spatial (10) destiné à être placé en orbite défilante autour de la Terre (80) suivant une direction défilement, comportant :
- des moyens de contrôle d'attitude de l'engin spatial,
- un instrument d'observation (20) associé à un champ de vision fixe en repère engin spatial et défini par un capteur matriciel (24) situé à un plan focal (PF) d'une optique de l'instrument d'observation,
- un module d'émission laser (30) associé à une ligne de visée laser (31) fixe en repère engin spatial, ledit module d'émission laser étant situé au plan focal ou à un plan focal secondaire (PS) de l'optique ou à un plan focal intermédiaire d'une partie de l'optique,
- des moyens configurés pour mettre en oeuvre un procédé d'émission de données selon l'une quelconque des revendications précédentes.

11. Engin spatial (10) selon la revendication 10, dans lequel :
- ledit engin spatial (10) étant d'inertie en tangage It et les moyens de contrôle d'attitude ayant une capacité Ct de formation de couple en tangage, le rapport Ct / It est supérieur à 0.01 s⁻², et/ou
- ledit engin spatial (10) étant d'inertie en roulis Iᵣ et les moyens de contrôle d'attitude ayant une capacité Cᵣ de formation de couple en roulis, le rapport Cᵣ / Iᵣ est supérieur à 0.01 s⁻².

12. Engin spatial (10) selon la revendication 11, dans lequel la capacité Ct est supérieure à 0.8 N·m et/ou la capacité Cᵣ est supérieure à 0.8 N·m.

13. Engin spatial (10) selon l'une quelconque des revendications 10 à 12, dans lequel les moyens de contrôle d'attitude comportent au moins une roue à réaction récupératrice d'énergie électrique et/ou au moins un actionneur gyroscopique.

14. Engin spatial (10) selon l'une quelconque des revendications 10 à 13, dans lequel l'instrument d'observation comporte au moins deux miroirs (M1, M2, M3, M4) fixes en repère engin spatial, et le module d'émission laser émet un rayonnement laser suivant la ligne de visée laser via aux moins deux miroirs de l'instrument d'observation.

15. Engin spatial (10) selon la revendication 14, dans lequel l'instrument d'observation comporte une optique de Korsch.

## Patentansprüche

1. Verfahren (50) zum Senden von Daten aus einem Raumfahrzeug (10), das die Erde (80) auf einer Umlaufbahn umrundet, wobei das Raumfahrzeug aufweist:
- ein Beobachtungsinstrument (20), das eine Optik und einen in einer Fokalebene (PF) der Optik angeordneten Matrixsensor (24) aufweist, um Bilder im Rahmen einer Beobachtungsmission des Raumfahrzeugs zu erfassen, wobei das Beobachtungsinstrument ein zugehöriges Sichtfeld hat, das bezogen auf das Raumfahrzeug ortsfest ist und von dem Matrixsensor (24) definiert ist,
- ein Laseremissionsmodul (30) mit einer zugehörigen Laservisierlinie (31), die bezogen auf das Raumfahrzeug ortsfest ist, wobei das Laseremissionsmodul in der Fokalebene oder in einer sekundären Fokalebene (PS) der Optik oder in einer Zwischenfokalebene eines Teils der Optik angeordnet ist,
wobei das Verfahren folgende Schritte aufweist:
- (S50) Erfassen eines Bilds einer Kalibrierungszone, Kalibrierungsbild genannt, mithilfe des Matrixsensors,
- (S51) Abrufen von Referenzdaten, die mit der Kalibrierungszone verknüpft sind,
- (S52) Bestimmen eines Ausrichtungsfehlers der Laservisierlinie durch Vergleichen des Kalibrierungsbilds und der Referenzdaten,
- (S53) Steuerung der Ausrichtung des Raumfahrzeugs durch Korrigieren des Ausrichtungsfehlers, um die Laservisierlinie hin zu einem Laserempfangsmodul auszurichten,
- (S54) Senden von Daten aus dem Laseremissionsmodul mit Ziel Laserempfangsmodul, wobei die Daten ein oder mehrere von dem Matrixsensor (24) im Rahmen der Beobachtungsmission des Raumfahrzeugs erfasste Bilder aufweisen.

2. Verfahren (50) nach Anspruch 1, wobei die Referenzdaten ein theoretisches Bild der Kalibrierungszone aufweisen.

3. Verfahren (50) nach Anspruch 2, wobei das Laserempfangsmodul in einer Bodenstation eingebaut ist und die Kalibrierungszone eine terrestrische Zone ist.

4. Verfahren (50) nach Anspruch 1 oder 2, wobei die Kalibrierungszone eine Himmelszone ist, so dass das Kalibrierungsbild Sterne darstellt, die sich in dem Sichtfeld des Matrixsensors befinden, und die Referenzdaten aus einem Sternenkatalog bestimmt werden.

5. Verfahren (50) nach Anspruch 4, wobei das Laserempfangsmodul an Bord eines anderen Raumfahrzeugs ist, das sich in einer Erdumlaufbahn befindet.

6. Verfahren (50) nach Anspruch 1, wobei die Kalibrierungszone eine Lichtquelle in einer vorgegebenen Position aufweist und die Referenzdaten eine theoretische Position der Lichtquelle in dem Kalibrierungsbild aufweisen, wobei der Ausrichtungsfehler durch Vergleichen einer geschätzten Position der Lichtquelle in dem Kalibrierungsbild mit der theoretischen Position bestimmt wird.

7. Verfahren (50) nach Anspruch 6, wobei die Lichtquelle gemeinsam mit dem Laserempfangsmodul lokalisiert wird.

8. Verfahren (50) nach einem der vorstehenden Ansprüche, wobei das Raumfahrzeug eine Umlaufgeschwindigkeit am Boden Vₛₒₗ hat und das Beobachtungsinstrument eine zugehörige räumliche Auflösung Rs in einer Umlaufrichtung hat, wobei die Erfassung des Kalibrierungsbilds während einer sogenannten Unbeweglichkeitszeitdauer von mehr als Rₛ/Vₛₒₗ durchgeführt wird, während der die Lage des Raumfahrzeugs derart gesteuert wird, dass ein Bodenabdruck des Sichtfelds auf der Erdoberfläche unbeweglich gehalten wird.

9. Verfahren (50) nach einem der vorstehenden Ansprüche, wobei die Schritte des Verfahrens für das Senden von Daten hin zu einem gleichen Laserempfangsmodul derart iteriert werden, dass Kalibrierungsphasen (PC₁, PC₂) und Sendephasen (PE₁, PE₂) einander abwechseln, wobei die Kalibrierungsphasen die Schätzung des Ausrichtungsfehlers durchführen und die Sendephasen das Senden von Daten hin zu dem gleichen Laserempfangsmodul durchführen.

10. Raumfahrzeug (10), das vorgesehen ist, in eine Umlaufbahn gebracht zu werden, auf der es die Erde (80) in einer Umlaufrichtung umrundet, aufweisend:
- Einrichtungen zur Lagesteuerung des Raumfahrzeugs,
- ein Beobachtungsinstrument (20) mit einem zugehörigen Sichtfeld, das bezogen auf das Raumfahrzeug ortsfest ist und von einem in einer Fokalebene (PF) einer Optik des Beobachtungsinstruments angeordneten Matrixsensor (24) definiert ist,
- ein Laseremissionsmodul (30) mit einer zugehörigen Laservisierlinie (31), die bezogen auf das Raumfahrzeug ortsfest ist, wobei das Laseremissionsmodul in der Fokalebene oder in einer sekundären Fokalebene (PS) der Optik oder in einer Zwischenfokalebene eines Teils der Optik angeordnet ist,
- Einrichtungen, die konfiguriert sind, ein Verfahren zum Senden von Daten nach einem der vorstehenden Ansprüche durchzuführen.

11. Raumfahrzeug (10) nach Anspruch 10, wobei:
- das Raumfahrzeug (10) eine Nickträgheit Iₜ hat und die Einrichtungen zur Lagesteuerung eine Nickmomentbildungskapazität Ct haben, wobei das Verhältnis Cₜ/Iₜ größer als 0,01 s⁻² ist, und/oder
- das Raumfahrzeug (10) eine Rollträgheit Iᵣ hat und die Einrichtungen zur Lagesteuerung eine Rollmomentbildungskapazität Cᵣ haben, wobei das Verhältnis Cᵣ/Iᵣ größer als 0,01 s⁻² ist.

12. Raumfahrzeug (10) nach Anspruch 11, wobei die Kapazität Ct größer als 0,8 N*m ist und/oder die Kapazität Cᵣ größer als 0,8 N*m ist.

13. Raumfahrzeug (10) nach einem der Ansprüche 10 bis 12, wobei die Einrichtungen zur Lagesteuerung mindestens ein Schwungrad zur Rückgewinnung von elektrischer Energie und/oder mindestens einen gyroskopischen Aktuator aufweisen.

14. Raumfahrzeug (10) nach einem der Ansprüche 10 bis 13, wobei das Beobachtungsinstrument mindestens zwei Spiegel (M1, M2, M3, M4) aufweist, die bezogen auf das Raumfahrzeug ortsfest sind, und das Laseremissionsmodul über die mindestens zwei Spiegel des Beobachtungsinstruments einen Laserstrahl entlang der Laservisierlinie emittiert.

15. Raumfahrzeug (10) nach Anspruch 14, wobei das Beobachtungsinstrument eine Korsch-Optik aufweist.

## Claims

1. A method (50) for transmitting data by a spacecraft (10) in orbit traveling around the Earth (80), the spacecraft including:
- an observation instrument (20) including optics and an array sensor (24) located at a focal plane (PF) of said optics, to acquire images in the context of an observation mission of the spacecraft, said observation instrument being associated with a fixed field of view in the spacecraft reference frame and defined by the array sensor (24),
- a laser emission module (30) associated with a fixed laser line of sight (31) in the spacecraft reference frame, said laser emission module being located at the focal plane or at a secondary focal plane (PS) of the optics or at an intermediate focal plane of a portion of the optics,
said method including steps of:
- (S50) acquiring, by the array sensor, an image of a calibration area, so-called the calibration image,
- (S51) obtaining reference data associated with the calibration area,
- (S52) determining a pointing error of the laser line of sight by comparison of the calibration image and the reference data,
- (S53) controlling pointing of the spacecraft by correcting the pointing error, to make the laser line of sight point towards a laser reception module,
- (S54) emitting data by the laser emission module to the laser reception module, said data including one or more image(s) acquired by the array sensor (24) in the context of the observation mission of the spacecraft.

2. The method (50) according to claim 1, wherein the reference data include a theoretical image of the calibration area.

3. The method (50) according to claim 2, wherein the laser reception module is integrated in a ground station and the calibration area is a terrestrial area.

4. The method (50) according to claim 1 or 2, wherein the calibration area is an area of the sky such that the calibration image represents stars in the field of view of the array sensor and the reference data are determined from a star catalogue.

5. The method (50) according to claim 4, wherein the laser reception module is embedded in another spacecraft in the Earth orbit.

6. The method (50) according to claim 1, wherein the calibration area includes a light source with a predetermined position and the reference data include a theoretical position of the light source in the calibration image, the pointing error being determined by comparison of an estimated position of the light source in the calibration image with the theoretical position.

7. The method (50) according to claim 6, wherein the light source is collocated with the laser reception module.

8. The method (50) according to any one of the preceding claims, wherein the spacecraft having a ground travel velocity Vₛₒₗ and the observation instrument being associated with a spatial resolution Rₛ along a travel direction, the acquisition of the calibration image is carried out during a so-called immobilization duration greater than Rₛ/Vₛₒₗ during which the attitude of the spacecraft is controlled so that a ground footprint of the field of view is kept immobile at the surface of the earth.

9. The method (50) according to any one of the preceding claims, wherein the steps of the method are iterated for the emission of data towards the same laser reception module, so as to alternate calibration phases (PC₁, PC₂) and emission phases (PE₁, PE₂), the calibration phases carrying out the estimation of the pointing error and the emission phases carrying out the emission of data towards the same laser reception module.

10. A spacecraft (10) intended to be placed in a travel orbit around the Earth (80) according to a travel direction, including:
- means for controlling the attitude of the spacecraft,
- an observation instrument (20) associated with a fixed field of view in the spacecraft reference frame and defined by an array sensor (24) located at a focal plane (FP) of optics of the observation instrument,
- a laser emission module (30) associated with a fixed laser line of sight (31) in the spacecraft reference frame, said laser emission module being located at the focal plane or at a secondary focal plane (PS) of the optics or at an intermediate focal plane of a portion of the optics,
- means configured to implement a data transmission method according to any one of the preceding claims.

11. The spacecraft (10) according to claim 10, wherein:
- said spacecraft (10) having a pitch inertia It and the attitude control means having a pitch torque creation capacity Cₜ, the ratio Cₜ/Iₜ is higher than 0.01 s⁻², and/or
- said spacecraft (10) having a roll inertia Iᵣ and the attitude control means having a roll torque creation capacity Cᵣ, the ratio Cᵣ/Iᵣ is higher than 0.01 s⁻².

12. The spacecraft (10) according to claim 11, wherein the capacity Ct is higher than 0.8 N.m and/or the capacity Cᵣ is higher than 0.8 N.m.

13. The spacecraft (10) according to any one of claims 10 to 12, wherein the attitude control means include at least one electrical energy recovering reaction wheel and/or at least one gyroscopic actuator.

14. The spacecraft (10) according to any one of claims 10 to 13, wherein the observation instrument includes at least two mirrors (M1, M2, M3, M4) fixed in the spacecraft reference frame, and the laser emission module emits a laser radiation along the laser line of sight via at least two mirrors of the observation instrument.

15. The spacecraft (10) according to claim 14, wherein the observation instrument includes Korsch optics.
